Europäisches Patentamt

European Patent Office

Office européen des brevets

(19)

(11) **EP 1 109 288 A1**

(12) **EUROPÄISCHE PATENTANMELDUNG**

(43) Veröffentlichungstag:
**20.06.2001 Patentblatt 2001/25**

(51) Int Cl.⁷: **H02K 1/20**

(21) Anmeldenummer: **00127340.8**

(22) Anmeldetag: **13.12.2000**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **16.12.1999 DE 19960727**

(71) Anmelder: **BAUMÜLLER NÜRNBERG GMBH
D-90482 Nürnberg (DE)**

(72) Erfinder:
• **Wehner, Hans-Jürgen, Dr.
91338 Igensdorf (DE)**
• **Gutjahr, Frank
91220 Schnaittach (DE)**

(74) Vertreter: **Götz, Georg, Dipl.-Ing. et al
Götz, Küchler, Dameron
Patent- und Rechtsanwälte
Postfach 11 93 40
90103 Nürnberg (DE)**

(54) **Ständer mit Kühlkanal für elektrische Maschine**

(57) Die Erfindung betrifft einen Ständer für eine elektrische Maschine mit rotierendem Innenläufer, mit einem den Ständer durchsetzenden Kühlkanal, der um die Läufer-Rotationsachse geführt ist, wobei der Kühlkanal über seinen Längsverlauf mit unterschiedlichen Querschnittsformen oder -weiten aufweisenden Abschnitten gestaltet ist.

Fig. 1

**Beschreibung**

Die Erfindung betrifft einen Ständer für eine elektrische Maschine mit rotierendem Innenläufer, welcher von wenigstens einem Kühlkanal durchsetzt ist, der um die Läufer-Rotationsachse geführt ist.

Ein derartiger Ständer ist bekannt (DE 196 51 959 A1): In der genannten Patentveröffentlichung ist ein Ständergehäuse eines Innenläufermotors beschrieben, worin ein Ständerblechpaket eingegossen ist. Zur Mantel- und/oder Röhrenkühlung ist eine das Ständerblechpaket umwindende Kühlrohrschlange vorgesehen, die in die Einheit aus Ständergehäuse und Ständerblechpaket integriert ist. Um für das Ständergehäuse eine kleine Baugröße zu erreichen, wird vorgeschlagen, die Kühlrohrschlange aus einem Metallrohr mit ovalem oder abgeflacht ovalem Querschnitt zu bilden. Dadurch läßt sich eine Verminderung des Durchmessers des Ständergehäuses erzielen. Mit dieser Maßnahme wird allerdings gleichzeitig der Nachteil einer Verminderung des Kühlmittel-Durchflusses und -durchsatzes erkauft.

Zum weiteren technologischen Hintergrund wird auf die Druckschriften DE-C-197 42 255 und DE-U-297 17 128 verwiesen.

Der Erfindung liegt die Aufgabe zugrunde, bei einem gekühlten Ständer einer elektrischen Maschine die Wirksamkeit des Ständer-Kühlkanals zu erhöhen, wobei gleichzeitig die Baugröße unter Beibehaltung einer hohen Antriebskraft der elektrische Maschine minimierbar ist.

Zur Lösung wird bei einem Ständer mit den eingangs genannten Merkmalen erfindungsgemäß vorgeschlagen, daß der Kühlkanal über seinen Längsverlauf mit unterschiedliche Querschnittsformen oder -weiten aufweisenden Abschnitten gestaltet ist. Vorteilhafte Ausbildungen ergeben sich aus den abhängigen Ansprüchen.

Mit dem erfindungsgemäßen Konzept, die Querschnittsform des Kühlkanals über dessen Längsverlauf bzw. über den Ständerumfang zu variieren, wird die Möglichkeit eröffnet, an bestimmten Umfangsabschnitten oder -bereichen des Ständers die Baugröße, Bauhöhe und/oder die Achshöhe zu beeinflussen, vor allem zu erniedrigen. Dies erfolgt durch eine vorzugsweise partielle Verminderung der Querschnittsbreite oder - weite oder des Durchmessers des Kühlkanals. Zum Ausgleich kann an anderen Ständer-Umfangsabschnitten der Kühlkanalquerschnitt in seiner Breite, Weite oder seinem Durchmesser vergrößert werden, wodurch auch der Kühlmittel-Durchsatz oder -Durchfluß gesteigert wird. An den Ständer-Umfangsabschnitten mit erweitertem Innendurchmesser des Kühlkanals erfolgt dann ein erhöhter Wärmeaustausch und eine effektivere Kühlung, die auch die Ständerbereiche oder Ständerumfangsabschnitte vorteilhaft beeinflußt, die vom Kühlkanal nur mit vermindertem Querschnitt durchsetzt sind.

Für das Ziel einer minimalen Bauform ist es zweckmäßig, wenn die Verminderung des Querschnitts in einer geometrischen Richtung, Linie oder Achse erfolgt, welche der radialen Richtung bzgl. der Läufer-Rotationsachse entspricht. Dies bedeutet bei einer Abflachung des Kühlkanalquerschnitts zu einer elliptisch-ovalen Form, daß die kürzere Ellipsenachse radial verläuft. Entsprechend ist es zweckmäßig, wenn bei rechteckigem Kühlkanal in einem abgeflachten Kanalabschnitt die kürzere Seitenhalbierende radial ausgerichtet ist.

Die Vorteile der Erfindungsidee kommen besonders gut zur Entfaltung bei einer Ständerstruktur mit zwei querschnittlichen Haupt- und zwei dazwischen liegenden Nebenachsen, wobei der Durchmesser oder die Breite oder Weite des Ständers im Bereich der Hauptachsen kleiner als im Bereich der Nebenachsen ist, um Bauhöhe und -größe oder Achshöhe für bestimmte Einbauumgebungen einzusparen. Bei einer solchen Ständer-Struktur wird im Rahmen der Erfindung im Bereich der Nebenachsen der Kühlkanalverlauf mit einem in radialer Richtung größeren Durchmesser und im Bereich der Hauptachsen mit einem in radialer Richtung abgeflachten Durchmesser gestaltet. Damit wird der vorteilhafte Effekt erzielt, daß im Bereich der Nebenachsen ein größerer Volumenstrom bzw. Durchsatz an Kühlmittel vorherrschen kann als im Bereich der Hauptachsen. Erfolgt mithin im Bereich der Nebenachsen ein verstärkter Wärmeaustausch zwischen Ständerblech und Kühlmittel, wird indirekt auch der Bereich des Ständers in den Hauptachsen stärker mitgekühlt.

Weitere Einzelheiten, Merkmale, Vorteile und Wirkungen auf der Basis der Erfindung ergeben sich aus der nachfolgenden Beschreibung eines bevorzugten Ausführungsweges der Erfindung sowie aus den Zeichnungen.

Diese zeigen in:

Figur 1      eine axial gerichtete Ansicht auf die Stirnseite eines erfindungsgemäßen Ständers, und

Figur 2      eine Schnittansicht nach Linie II-II in Figur 1.

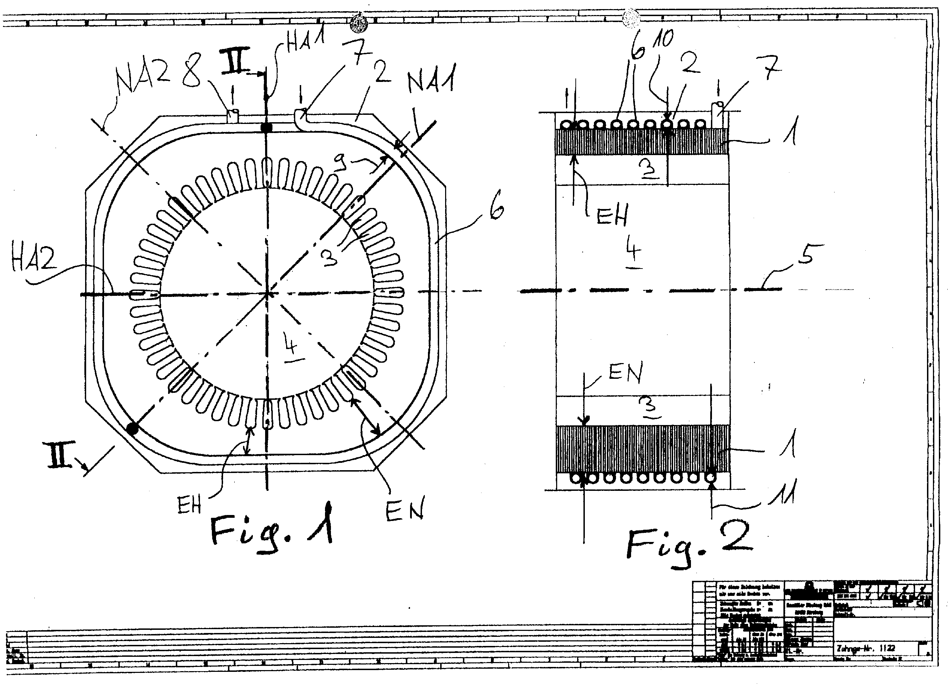

Gemäß Figuren 1 und 2 ist der dargestellte Ständer aus einem Ständerblechpaket 1 und einem dieses umfassenden Außenmantel bzw. Gehäuse 2 zusammengesetzt. Das Ständerblechpaket 1 ist an seinem Innenumfang, der dem Luftspalt zugeordnet ist, mit einer Vielzahl von Aufnahmenuten 3 für Ständerwicklungen versehen. Eine an die Nuten 3 angrenzende Innenbohrung 4 dient zur Aufnahme eines (nicht gezeichneten) Innenläufers, der zur Drehung um eine Rotationsachse 5 vorgesehen ist. Im Gehäuse 2 ist eine Kühlrohrschlange 6 mit einem Eingangsanschluß 7 und einem Ausgangsanschluß 8 zwecks Herbeiführung einer Röhrenkühlung eingegossen. Die Kühlrohrschlange bzw. der Kühlkanal 6 umwindet das Ständerblechpaket 1 wendelförmig und umläuft dabei die Rotationsachse 5 schraubenlinienartig vom Eingangsanschluß 7 bis zum Ausgangsanschluß 8.

Der Querschnitt des Ständers 1, 2 besitzt nach Figur 1 mehrere Symmetrieachsen, nämlich zwei jeweils aufeinander senkrecht stehende und sich in der Rotationsachse 5 schneidende Haupt- und Nebenachsen HA1, HA2, NA1, NA2. Die Nebenachsen NA1, NA2 bilden jeweils eine Winkelhalbierende für das durch die beiden Hauptachsen HA1, HA2 geformte Achsenkreuz. Mit anderen Worten, über den Umfang des Ständers 1, 2 wechselt immer eine Hauptachse mit einer Nebenachse ab. Wie insbesondere aus der Schnittansicht gemäß Figur 2 erkennbar, ist die radiale Erstreckung EN des Ständerblechpakets 1 im Bereich der Nebenachsen NA1, NA2 bzw. beidseits und in Nachbarschaft von diesen größer als die radiale Erstreckung EH des Ständerblechpakets 1 im Bereich der Hauptachsen oder beidseits bzw. in Nachbarschaft von diesen:

$$EN > EH$$

Die Kühlrohrschlange bzw. der Kühlkanal 6 ist im Bereich um die Nebenachsen NA1, NA2 herum im Vergleich zu den Kühlkanalabschnitten, die im Bereich der Hauptachsen HA1, HA2 verlaufen, mit einer Aufweitung 9 versehen, die in bezug auf die Rotationsachse 5 im wesentlichen radial ausgerichtet ist. Die radiale Aufweitung bzw. der Durchmesser-Unterschied in radialer Richtung kommt dadurch zustande, daß im Bereich der Hauptachsen HA1, HA2 der Kühlkanal einen elliptisch-ovalen Querschnitt besitzt, dessen minimaler Ellipsendurchmesser 10 entsprechend der radialen Richtung in bezug auf die Rotationsachse 5 verläuft. Demgegenüber ist, wenn der Kühlkanal 6 von dem Bereich auf den und um die Hauptachsen HA1, HA2 herum in den Bereich auf den und um die Nebenachsen NA1, NA2 herum gelangt, dessen Querschnitt kreisrund gestaltet, wobei der in radialer Richtung des Ständers gemessene Kreisdurchmesser 11 deutlich größer ist als der minimale Ellipsendurchmesser 10 im Bereich der Hauptachsen HA1, HA2. Damit wird im Bereich der Nebenachsen NA1, NA2 ein größerer Volumenstrom und Durchsatz an Kühlmittel als im Bereich der Hauptachsen HA1, HA2 ermöglicht. So kann dem größeren Kühlbedarf des Ständerblechpakets im Bereich der Nebenachsen NA1, NA2 Rechnung getragen werden, der auf die dortige größere radiale Erstreckung EN zurückgeht. Andererseits kann zur Verminderung des Ständerdurchmessers bzw. der Bauhöhe im Bereich der Hauptachsen HA1, HA2 die radiale Erstreckung EH des Ständerblechpakets 1 vermindert sein. Es wird insgesamt bei verminderter Bauhöhe gleichwohl eine optimierte Leistungsfähigkeit für die entsprechende elektrische Maschine erreicht.

**Bezugszeichenliste**

| 1 | Ständerblechpaket |
|---|---|
| 2 | Gehäuse |
| 3 | Aufnahmenuten |
| 4 | Innenbohrung |
| 5 | Rotationsachse |
| 6 | Kühlrohrschlange |
| 7 | Eingangsanschluß |
| 8 | Ausgangsanschluß |
| HA1, HA2 | Hauptachsen |
| NA1, NA2 | Nebenachsen |
| EN | radiale Erstreckung |
| EH | radiale Erstreckung |
| 9 | radiale Aufweitung |
| 10 | minimaler Ellipsendurchmesser |
| 11 | Kreisdurchmesser |

**Patentansprüche**

1. Ständer für eine elektrische Maschine mit rotierendem Innenläufer, mit einem den Ständer (1,2) durchsetzenden Kühlkanal (6), der um die Läufer-Rotationsachse (5) geführt ist, **dadurch gekennzeichnet, daß** der Kühlkanal (6) über seinen Längsverlauf mit unterschiedliche Querschnittsformen oder -weiten (10,11) aufweisenden Abschnitten gestaltet ist.

2. Ständer nach Anspruch 1, dadurch gekennzeichnet, daß der Kühlkanal (6) einen oder mehrere Abschnitte mit jeweils einem Querschnittsprofil aufweist, das gegenüber den Querschnittsprofilen sonstiger Abschnitte in radialer Richtung abgeflacht und/oder verengt ist.

3. Ständer nach Anspruch 1 oder 2, dadurch gekennzeichnet, daß der Kühlkanal (6) Abschnitte mit kreisrundem und mit elliptisch-ovalem Querschnittsprofil (10,11) aufweist, wobei der minimale Ellipsendurchmesser (10) des elliptisch-ovalen Querschnittsprofils bezüglich der Rotationsachse (5) in radialer Richtung verläuft.

4. Ständer nach Anspruch 1 oder 2, dadurch gekennzeichnet, daß der Kühlkanal Abschnitte mit quadratischem und mit nichtquadratisch rechteckigem Querschnittsprofil aufweist, und beim letztgenannten Querschnittsprofil die kürzere Seitenhalbierende bezüglich der Rotationsachse in radialer Richtung verläuft.

5. Ständer nach einem der vorangehenden Ansprüche, dessen Querschnitt zwei vorzugsweise in der Rotationsachse (5) aufeinander senkrecht stehende Symmetrie-Hauptachsen (HA1,HA2) und zwei im Schnittpunkt der Hauptachsen aufeinander senkrecht stehende Symmetrie-Nebenachsen (NA1,NA2) aufweist, die jeweils zwischen den beiden Hauptachsen (HA1,HA2) liegen, dadurch gekennzeichnet, daß im Bereich der Hauptachsen (HA1,HA2) das Querschnittsprofil sowohl des Ständers (1,2) als auch seines Kühlkanals (6) in bezüglich der Rotationsachse (5) radialer Richtung eine geringere Breite, Weite oder sonstige Erstreckung (EH) aufweist als im Bereich der Nebenachsen (NA1,NA2).

**Europäisches Patentamt**

# EUROPÄISCHER RECHERCHENBERICHT

Nummer der Anmeldung

EP 00 12 7340

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2 894 155 A (GENERAL ELECTRIC COMPANY) 7. Juli 1959 (1959-07-07) * Spalte 3, Zeile 23 - Zeile 29 * * Abbildung * --- | 1 | H02K1/20 |
| A,D | DE 196 51 959 A (SIEMENS AG) 18. Juni 1998 (1998-06-18) ----- | | |

**RECHERCHIERTE SACHGEBIETE (Int.Cl.7)**

H02K

Der vorliegende Recherchenbericht wurde für alle Patentansprüche erstellt

| Recherchenort | Abschlußdatum der Recherche | Prüfer |
|---|---|---|
| BERLIN | 21. Februar 2001 | Foussier, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 12 7340

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-02-2001

| Im Recherchenbericht angeführtes Patentdokument | Datum der Veröffentlichung | Mitglied(er) der Patentfamilie | Datum der Veröffentlichung |
|---|---|---|---|
| US 2894155       A | 07-07-1959 | KEINE | |
| DE 19651959      A | 18-06-1998 | AT        3236 U | 25-11-1999 |

Für nähere Einzelheiten zu diesem Anhang : siehe Amtsblatt des Europäischen Patentamts, Nr.12/82

EPO FORM P0461